# FASCICULE DE BREVET EUROPEEN

(11) **EP 1 918 016 B1**
(45) Date de publication et mention de la délivrance du brevet: **21.03.2012**
(21) Numéro de dépôt: 06022215.5
(22) Date de dépôt: 24.10.2006
(51) Int. Cl.: B01D 53/86, B01J 29/68

(54) **Catalyseur a base de zéolithe de type ferriérite / fer pour la décomposition de N20 et réduction catalytique NOx et N20**
Ferrierit/eisen enthaltender Katalysator für die Zersetzung von N20 und die katalytische Reduktion von NOx und N2O
Catalyst based on ferrierite / iron used for the abatement of N2O and catalytic reduction of nitrous oxide

(43) Date de publication de la demande: 07.05.2008
(73) Titulaire: GPN, 92400 Courbevoie (FR); INSTITUT REGIONAL DES MATERIAUX AVANCES (IRMA), 56274 Ploemeur (FR)
(72) Inventeur: Hamon, Christian, 44600 Saint Nazaire (FR); Le Guern, Delphine, 56520 Guidel (FR); Le Lamer, Olivier, 56100 Lorient (FR); Navascues, Luc, 75011 Paris (FR)
(74) Mandataire: Leyder, Francis

(56) Documents cités:
- EP-A- 1 674 157
- WO-A-99/34901
- WO-A-2006/119870
- US-A1- 2004 109 805
- MELIAN-CABRERA I ET AL: "Highly active and stable ion-exchanged Fe-Ferrierite catalyst for N2O decomposition under nitric acid tail gas conditions" CATALYSIS COMMUNICATIONS, ELSEVIER SCIENCE, AMSTERDAM, NL, vol. 6, no. 4, avril 2005 (2005-04), pages 301-305, XP004804511 ISSN: 1566-7367
- KAUCKY ET AL: "Isothermal oscillation during N2O decomposition over Fe- and Fe/Pt-ferrierite: Effect of NO addition" JOURNAL OF CATALYSIS, ACADEMIC PRESS, DULUTH, MN, US, vol. 242, no. 2, 10 septembre 2006 (2006-09-10), pages 270-277, XP005593274 ISSN: 0021-9517
- KAUCKY ET AL: "Effect of FeH-zeolite structure and Al-Lewis sites on N2O decomposition and NO/NO2-assisted reaction" JOURNAL OF CATALYSIS, ACADEMIC PRESS, DULUTH, MN, US, vol. 238, no. 2, 10 mars 2006 (2006-03-10), pages 293-300, XP005282881 ISSN: 0021-9517
- MECAROVA M ET AL: "Selective catalytic reduction of NOx with ammonia on gallium-exchanged ferrierites" APPLIED CATALYSIS A: GENERAL, ELSEVIER SCIENCE, AMSTERDAM, NL, vol. 282, no. 1-2, 30 mars 2005 (2005-03-30), pages 267-272, XP004768635 ISSN: 0926-860X

## Description

La présente invention concerne d'abord un catalyseur à base de zéolithe type ferrierite agglomérée spécifique et ensuite un procédé de préparation dudit catalyseur et un procédé de traitement d'effluents gazeux contentant du N₂O.

L'effet nocif des émissions d'oxydes nitriques (NOx) est un phénomène bien connu. En effet, ces oxydes se combinent facilement à l'eau (NO₂) et les manifestations les plus spectaculaires sont sans doute les pluies acides avec destruction subséquente des forêts et dégradation des monuments exposés, les plus insidieuses étant la contamination de l'air respirable (pollution photochimique avec formation d'ozone) et son incidence sur la santé publique.

Le protoxyde d'azote (N₂O) est un gaz à effet de serre dont le pouvoir radiatif est 310 fois celui du CO₂ et l'on a pris conscience depuis quelques années de la contribution notable de ce gaz à l'amplification de l'effet de serre qui risque de conduire à des modifications climatiques aux effets incontrôlables et peut être aussi de sa participation à la destruction de la couche d'ozone.

La réduction des émissions de N₂O est ainsi devenue une préoccupation des pouvoirs publics et des industriels.

La présente invention s'inscrit dans la réduction des émissions de N₂O d'origine industrielle par voie catalytique en le décomposant en N₂ et O₂ mais aussi, selon une variante, par la réduction simultanée du N₂O et des NOx.

Les émissions de N₂O d'origine industrielle concernent principalement la chimie et essentiellement les procédés de synthèse d'acide nitrique et de synthèse organique par oxydation nitrique de glyoxal, caprolactame ou acide adipique (Voir à ce sujet Freek Kapteijn et al « Heterogeneous Catalytic Decomposition of Nitrous Oxide », dans Applied Catalysis B, environmental 9, Num. 1-4 1996, 25-64).
Dans le cas des unités d'acide nitrique, le N₂O se forme lors de l'oxydation de l'ammoniac en NO sur toiles de platine. C'est un sous produit de la réaction. Le N₂O se retrouve dans les gaz de queue (après colonne de lavage pour la fabrication HNO₃ par absorption NO₂ dans H₂O et avant la turbine de détente), avec les NOx (mélange NO/NO₂) non transformés en HNO₃ dans cette colonne.

Depuis quelques années, la plupart des ateliers nitriques sont équipés de réacteurs catalytiques dits DeNOx pour la réduction des NOx par NH₃ en N₂ et H₂O. De tels catalyseurs DeNOx sont décrits, par exemple, dans les demandes de brevet EP 483 201 et EP 914 866. On peut citer comme exemple le catalyseur GPRN16 de Grande Paroisse S.A. Toutefois, généralement le N₂O ne subit pas de transformation sur ce type de catalyseur, sa concentration ayant plutôt tendance à augmenter.

EP 625 369 propose, pour réduire la teneur en N₂O des effluents gazeux issus des procédés d'oxydation nitrique de la chimie organique, de détruire catalytiquement le protoxyde d'azote contenu dans ces derniers sur un catalyseur type mordénite / fer. Mais, compte tenu de la forte chute de son activité en présence de vapeur d'eau dans la plage de température 350 - 450°C, ce catalyseur n'est pas bien adapté au fonctionnement sur des gaz dilués et vieillit mal du fait d'une médiocre résistance hydrothermique.

Les gaz de queue des unités d'acide nitrique en amont de la turbine de détente ont généralement une composition qui peut varier dans la plage suivante :
- température : 180 à 550°C et de préférence : 400 à 500°C
- teneur en N₂O : 200 à 1 500 ppmv
- teneur en NOx : 50 à 2 000 ppmv et de préférence 100 à 1 000 ppmv
- teneur en H₂O : 0,3 à 3 % et de préférence : 0,3 à 1,5 %.
- teneur en oxygène : 2 à 4 %
- le complément étant essentiellement de l'azote.

Le procédé est également applicable au traitement des gaz issus d'ateliers d'oxydation de composés organiques par l'acide nitrique, en particulier dans la fabrication de l'acide adipique, du glyoxal et de l'acide glyoxylique. Ce sont des gaz dont la composition approximative avant éventuelle dilution à l'air varie dans les plages suivantes :
- teneur en N₂O : entre 20 et 70 %
- teneur en NOx : 500 et 10 000 ppmv
- teneur en H₂O : entre 0,5 et 10 %
- teneur en O₂ : 1 et 5 %
- teneur en CO₂ : 0 à 5 %
- présence minoritaire éventuelle de CO et/ou de composés organiques
- le complément étant constitué par de l'azote.

Dans le cas des ateliers d'oxydation nitrique de composés organiques, en chimie de synthèse organique, la composition est très différente (taux de N₂O >20 % vol.) de celle des gaz de queue des ateliers de synthèse d'acide nitrique, le point essentiel étant la teneur en N₂O très élevée. Ceci implique une dilution des effluents, par exemple par de l'air ambiant, afin de réduire la teneur en N₂O pour limiter l'élévation de température sur le catalyseur en raison de l'exothermicité de la réaction de décomposition du N₂O. On estime que la teneur maximale en N₂O acceptable, pour une température d'entrée du catalyseur de 400°C sur un lit de catalyseur, objet de la présente invention, dans un réacteur adiabatique, est de 12 % du volume, ce qui correspond à une température à la sortie du catalyseur allant de 650 à 700°C.

WO 99/34901 propose un catalyseur pour l'élimination de N₂O dans les gaz de queue des unités d'acide nitrique et pour les ateliers d'oxydation nitrique dans le domaine de la chimie organique, lequel catalyseur est à base d'agglomérés formés de 80 à 90 % d'une ferriérite/fer titrant de 1 à 6 % de fer avec un taux d'ions potassium en position d'échange de 0,1 à 0,5 %. Cependant, l'efficacité de ce catalyseur, bien qu'améliorée par rapport aux catalyseurs de l'art antérieur cité, reste encore à améliorer. Plus particulièrement, il apparaît le besoin de nouveaux catalyseurs plus efficaces encore, pour répondre à des besoins spécifiques d'utilisation, à la fois dans les ateliers d'acide nitrique et dans les ateliers d'oxydation nitrique des composés organiques en chimie de synthèse organique. Ces besoins s'expriment en termes d'amélioration de l'activité/efficacité/selectivité du catalyseur dans l'élimination de N₂O à une température d'au moins 400°C en présence de vapeur d'eau et en particulier en présence de NOx. Dans ces conditions il sera nécessaire de disposer d'un catalyseur performant ayant une stabilité hydrothermique élévée. Plus particulièrement, dans le cas de l'oxydation nitrique de composés organiques, des températures élévées peuvent être atteintes, pouvant aller jusqu'à 650 - 700°C, du fait de l'exothermicité élévée de la réaction d'oxydation nitrique.
La présente invention propose donc comme premier objet un catalyseur selon la revendication 1 significativement amélioré, par rapport à ceux décrits dans l'état de l'art le plus proche, pour répondre aux besoins cités ci-avant. Il s'agit d'un catalyseur à base de zéolithe type fernérite/fer agglomérée. Sous sa forme initiale, cette ferriérite est sous la forme sodique (Na) et potassique (K), les ions Na⁺ et K⁺ étant échangeables (totalement ou partiellement) par des ions NH₄⁺. La ferriérite sous la forme ammonium (NH₄⁺) est ensuite échangée partiellement par des ions Fe²⁺.

La zéolithe de type ferriérite est un produit parfaitement défini en termes de structure cristalline par le diagramme de diffraction X avec les distances intermédiaires (BRECK : "The synthetic zeolites", Edition 1974. table 4, 45 page 358). Ainsi, la ferriérite est une zéolithe parcourue par deux systèmes de canaux. L'un parallèle à l'axe c de la structure, formé de canaux de section elliptique (0,43 nm x 0,55 nm) d'environ 0,18 nm² (18A°²), l'autre parallèle à l'axe b et l'axe c de la structure, avec des canaux formés d'anneaux à 8 maillons, d'axes 0,34 x 0,48 nm. Il n'y a pas de canal parallèle à l'axe a. Sur ces canaux, se situent des cavités approximativement sphériques, d'un diamètre approximatif de 0,7 nm, qui ne sont accessibles qu'au travers des anneaux à 8 maillons, soit via des pores de 0,43 nm°X 0,55 nm ou 0,34 nm x 0,48 nm.

Les teneurs optimales en poids de sodium et de potassium, dans le cas particulier du catalyseur de la présente invention, sont inférieure à 0,1 % pour le sodium et inférieure à 0,7 % , de préférence inférieure à 0,5 % pour le potassium. La teneur en poids en fer varie de 0,5 à 1,2 %. Il est rappelé que ces teneurs en poids sont exprimées par rapport au poids de la zéolithe sèche non agglomérée, telle qu'obtenue (séchée) après traitement à 800°C pendant au moins 4 heures.

Un second objet de la présente invention est un procédé de préparation dudit catalyseur aggloméré comprenant les étapes d'agglomération par extrusion, de calcination des extrudés, d'échanges aux ions ammonium (NH₄⁺), puis d'échanges aux ions fer (Fe²⁺) et de séchage.

Un autre objet de l'invention est un procédé de traitement d'effluents gazeux contenant du N₂O et qui comprend au moins une étape de décomposition du N₂O utilisant comme catalyseur de décomposition du N₂O, ledit catalyseur selon l'invention.

Fait partie aussi de l'invention un procédé de traitement simultané, par réduction simultanée à la fois du N₂O et des NOx par l'ammoniac, sur un seul (même) lit de catalyseur à base du catalyseur, tel que défini selon l'invention.

Enfin, le dernier objet de l'invention concerne l'utilisation dudit catalyseur dans le traitement du N₂O (DeN₂O) et des NOx (DeNOx) des effluents contenant du N₂O et des NOx et plus particulièrement des gaz de queue des unités de synthèse d'acide nitrique ou traitement des effluents gazeux issus des procédés d'oxydation de composés organiques par l'acide nitrique ou traitement des effluents gazeux issus de procédés de combustion, par exemple du charbon en lit fluidisé (LFC: lit fluidisé circulant) ou de la combustion de la biomasse.

Le premier objet de l'invention est donc un catalyseur de décomposition de N₂O, comprenant une zéolithe type ferriérite agglomérée, sous forme initiale Na et K échangée à l'ammonium et finalement échangée au fer, caractérisé en ce que :
i) le taux en poids dudit fer varie de 0,5 à 1,2 % par rapport au poids de la zéolithe,
ii) le taux de sodium est inférieur à 0,1 % et le taux de potassium inférieur à 0,7 %, de préférence inférieur à 0,5 % et plus particulièrement inférieur à 0> 1 % en poids par rapport au poids de la zéolithe.

Ce catalyseur est sous forme d'agglomérés composés de préférence de 70 à 90 % en poids de la dite ferriérite et de 10 à 30 % d'un liant sélectionné parmi les liants argileux, silicieux ou alumineux. Le liant préféré est choisi parmi les alumineux (alumines) et plus particulièrement l'alumine peptisée par HNO₃.

La zéolithe de type ferriérite, convenable pour la présente invention, a un rapport Si/A1 atomique allant de 8 à 20 plus préférentiellement de 8 à 10.

Un exemple d'une telle zéolithe type ferriérite de départ, convenable pour l'invention, a un rapport de 8,75 selon la formule suivante, compte tenu des teneurs en Na de 0,89 % et K de 4,8 % (produit sec sans H₂O) : Na_{0,24}K_{0,76}AlO_{2 8,75}SiO₂.

La zéolithe (ferriérite/fer) du catalyseur selon l'invention peut être obtenue par un procédé comprenant les étapes suivantes :
- échange des ions sodium et potassium sur la zéolithe agglomérée, par un sel d'ammonium, de préférence le sulfate ou nitrate d'ammonium, pour remplacer les ions Na⁺ et K⁺ par des ions NH₄⁺,
- échange au moins partiel desdits ions ammonium par un sel de fer, de préférence le sulfate de fer, ledit sel de fer et de préférence sulfate de fer, ayant de préférence un taux d'impuretés de moins de 0,5 %, consistant essentiellement d'autres sels métalliques.

Ledit catalyseur de l'invention est un catalyseur sélectif de décomposition du N₂O, mais il peut aussi remplir la fonction de catalyseur de réduction simultanée de N₂O et des NOx, par l'ammoniac.

Ce catalyseur selon l'invention se présente sous forme d'extrudés de diamètre pouvant aller de 1,8 à 3 mm et de longueur moyenne de 5 à 10 mm, mais ceci n'est pas limitatif. Il peut se présenter sous tout autre forme connue de l'homme de l'art et par exemple : hollows, cannelés, etc. Il peut aussi être mis en forme en nid d'abeille (honeycomb) selon des technologies d'extrusion particulière connue de l'homme de l'art.

Un des points importants de ce catalyseur est sa remarquable stabilité hydrothermique à des températures allant jusqu'à 650 - 700°C.

Le deuxième objet de l'invention concerne un procédé de préparation dudit catalyseur. Ce procédé de préparation comprend les étapes suivantes :
i) Mise en forme du catalyseur, laquelle mise en forme comprend le mélange avec un liant par des malaxeurs appropriés, puis l'extrusion sous forme de granulés. Le liant préféré est de l'alumine peptisée par de l'acide nitrique, la teneur en liant exprimée en Al₂O₃ étant de préférence de 10 à 30 %.
ii) Calcination desdits extrudés agglomérés à une température allant de 350 à 450°C sous air et de préférence pendant une durée allant de 10 à 15 heures.
iii) Refroidissement à l'ambiante, suivi d'échange par un sel d'ammonium, de préférence le sulfate ou nitrate d'ammonium. De préférence, la température est contrôlée autour de 70 à 80°C et la durée de 1 à 3 heures, avec une solution de sulfate d'ammonium allant de 600 à 800 g/l et un ratio volume de solution (V) en litres sur poids d'extrudés en kg de 3 à 6.
iv) Lavages successifs par trempage dans l'eau déminéralisée, suivis d'échange avec une solution aqueuse de sel de fer, de préférence le sulfate de fer et plus particulièrement à 0,1-0,6 M et à une température de 70-80°C pendant 1 à 3 heures avec un rapport volume / poids V/P de 3 à 5, ledit sel de fer et de préférence sulfate de fer, ayant de préférence un taux d'impuretés de moins de 0,5 %, consistant essentiellement d'autres sels métalliques.
v) Nouveaux lavages par trempage dans l'eau déminéralisée, suivis de séchage, de préférence sur plateaux et à une température de 80 à 110°C et plus particulièrement pour une durée de 12 à 24 heures.

Un autre objet de la présente invention concerne un procédé de traitement d'effluents gazeux comprenant N₂O, ledit procédé comprenant au moins une étape de décomposition de N₂O, sur lit catalytique comprenant comme catalyseur de décomposition au moins un catalyseur tel que défini ci-haut selon l'invention. Lesdits effluents gazeux sont de préférence des effluents de queue d'ateliers d'acide nitrique, auquel cas l'étape de décomposition est réalisée sous pression pouvant aller de 4 à 12 bars, ou des effluents d'ateliers d'oxydation nitrique de composés organiques dans la chimie de synthèse organique, avec les compositions telles que définies précédemment, auquel cas l'étape de décomposition de N₂O se passe à pression atmosphérique.
Une variante de ce procédé, applicable en particulier dans le cas du traitement des effluents d'ateliers d'acide nitrique, porte sur la réduction de la teneur en N₂O, mais aussi en NOx, ledit procédé comprenant au moins les deux étapes successives suivantes :
i) décomposition du N₂O sous pression, pouvant aller de 3 à 12 bars, sur un premier lit catalytique, comprenant au moins un catalyseur défini selon l'invention.
ii) réduction simultanée des NOx et du N₂O résiduel issu de l'étape (i), en présence d'ammoniac, sur un deuxième lit avec soit le même catalyseur qu'à l'étape i) ou différent de celui de l'étape i), mais pouvant être soit un autre catalyseur tel que défini selon l'invention, soit un catalyseur différent de celui défini selon l'invention, suivant d'autres variantes possibles de ce procédé.

Comme exemple de catalyseur différent de celui défini selon l'invention et utilisable à étape ii), on peut citer d'autres zéolithes au fer telle que la pentasil de type ZSM-5 au fer. Dans le cas où le catalyseur est différent de celui de l'étape i), mais toujours défini selon l'invention, il pourra différer de celui de l'étape i), sur des caractéristiques de composition comme par exemple le taux de fer échangé et/ou K, ou le ratio Al/Si etc.

Dans le cas de cette étape ii), le taux résiduel de N₂O dans les effluents gaz, à l'entrée du deuxième lit catalytique (ce qui signifie à la sortie du premier lit catalytique) de préférence est dans la plage allant de 100 à 250 ppmv et plus préférentiellement dans la plage allant de 150 à 200 ppmv, avec un rapport molaire NH₃/(NOx + N₂O) allant de 0,7 à 1,1 et de préférence de 0,7 à 1.

Ledit procédé comprenant les deux étapes i) et ii) définies ci-dessus, peut comprendre en plus une troisième étape de traitement sélectif des NOx residuel à la sortie (fin) de l'étape ii), avec un lit catalytique à base soit du même catalyseur que l'étape ii), soit différent de celui de l'étape ii), mais pouvant être choisi toujours parmi les catalyseurs tels que définis selon l'invention, ou parmi des catalyseurs différents de celui l'étape ii) et aussi différents de ceux définis selon l'invention. Le critère de choix de ce catalyseur de finition de la troisième étape est son aptitude de réduire encore le taux des NOx en sortie de cette étape iii), sans augmenter le taux de N₂O. Le taux des NOx résiduels pourrait aussi être sélectivement réduit lors d'une telle troisième étape iii) équivalente, par l'augmentation du rapport NH₃/(NOx+N₂O) à une valeur bien supérieure à 1,1.

Un autre procédé de traitement d'effluent gazeux, utilisant le catalyseur selon l'invention, comprend au moins une étape de réduction simultanée de N₂O et des NOx par l'ammoniac sur un seul (même) lit catalytique, comprenant, ou de préférence consistant en, au moins un catalyseur tel que défini ci-haut selon l'invention. Cette étape peut être la seule étape (directe) du procédé de traitement des effluents à traiter, en particulier dans le cas des effluents issus des ateliers d'acide nitrique, avec un rapport volumique NH₃/oxydes d'azote (NOx +N₂O) pouvant varier de 0,7 à 1,1.

En général les vitesses volumiques horaires (VVH) utilisées pour ces procédés de traitement varient de 5 000 h⁻¹ à 50 000 h⁻¹ et de préférence de 10 000 h⁻¹ à 30 000 h⁻¹.

Un dernier objet de la présente invention concerne l'utilisation d'au moins un catalyseur tel que défini selon l'invention, qui peut, à la fois être utilisé pour la décomposition sélective de N₂O (traitement DeN₂O), mais aussi pour la réduction simultanée des NOx et de N₂O (traitements DeNOx et DeN₂O), en présence d'ammoniac. Il s'agit bien d'une utilisation bifonctionnelle, le même catalyseur remplissant les deux fonctions. Les effluents gazeux concernés peuvent être les effluents gazeux de queue d'ateliers d'acide nitrique ou les effluents gazeux d'ateliers d'oxydation nitrique de composés organiques dans la chimie de synthèse organique (de préférence pour la décomposition de N₂O à pression atmosphérique) ou des effluents gazeux issus des procédés et dispositifs de combustion, en particulier du charbon en lit fluidisé (LFC) ou de la combustion de la biomasse.

### PARTIE EXPERIMENTALE

Les exemples qui suivent sont donnés à titre d'illustration de la présente invention et ne limitent pas sa portée.

### Influence de la teneur en Na, K

Nous avons utilisé un lot de ferriérite forme Na, K, fourni par Tosoh sous référence commerciale HSZ-720 KOA, dont le rapport molaire Si/AI est de 8,75. Sa formule (sur sec) est donc : Na_{0,24}K_{0,76}AlO_{2 8,75}SiO₂. Elle est mise en oeuvre sous forme d'extrudés de 1,8 mm de diamètre, avec 20 % en poids de liant (exprimé en Al₂O₃) à base d'alumine peptisée par de l'acide nitrique. Ces extrudés sont séchés dans une étuve ventilée sur plateaux et sous air à 120°C pendant une nuit.

L'échange par ion ammonium est effectué avec une solution de sulfate d'ammonium (on peut utiliser aussi le nitrate d'ammonium), avec un rapport V/P de 5 (avec V : volume de solution de sel de fer en litres et P : poids du catalyseur en kg).

Nous avons fait varier la concentration en sulfate d'ammonium, la température et le temps afin d'avoir différentes teneurs en Na et K après échange. Sur chacun des lots (après séchage à 120°C), nous avons effectué un échange au fer avec une solution de sulfate de fer dans les conditions suivantes :
- V/P = 5
- Solution FeSO₄7H₂O : 1 M, soit 55,8 g fer/litre
- T = 8°C
- Durée : 2h30
- Pas d'agitation

Les extrudés sont ensuite lavés par trempages successifs dans de l'eau déminéralisée, puis séchés. Les teneurs Na, K et en fer (rapportée à la zéolithe) sont présentées au tableau 1 ci-dessous. La teneur en Fe varie d'environ 1 à 2%.

**Tableau 1**

| **Référence** Catalyseur testé | **% poids** | | |
|---|---|---|---|
| | **Na** | **K** | **Fe** |
| 1 | < 0,01 | 0,36 | 1,07 |
| 2 | < 0,01 | 0,18 | 0,97 |
| 3 | < 0,01 | 0,09 | 1,18 |
| 4 | 0,02 | 1,16 | 1,64 |
| 5 | 0,03 | 1,42 | 1,42 |
| 6 | 0,48 | 2,07 | 2,0 |
| 7 | 0,02 | 0,71 | 1,37 |
| 8 | 0,65 | 3,53 | 1,65 |

Ces catalyseurs ont été testés dans des conditions standards, en décomposition de N₂O dans un réacteur de 1" (1,54 cm) de diamètre. Les extrudés sont au préalable granulés à 0,5 - 1 mm compte tenu du diamètre du réacteur.

Les conditions opératoires sont les suivantes :
- Volume catalyseur : 25 cm³
- Vitesse Volumétrique Horaire (VVH) : 10 000 h⁻¹
- Composition du mélange réactionnel :
   - N₂O : 1 000 ppmv
   - NOx : 1 000 ppmv
   - O₂ : 5%
   - H₂O : 3 %

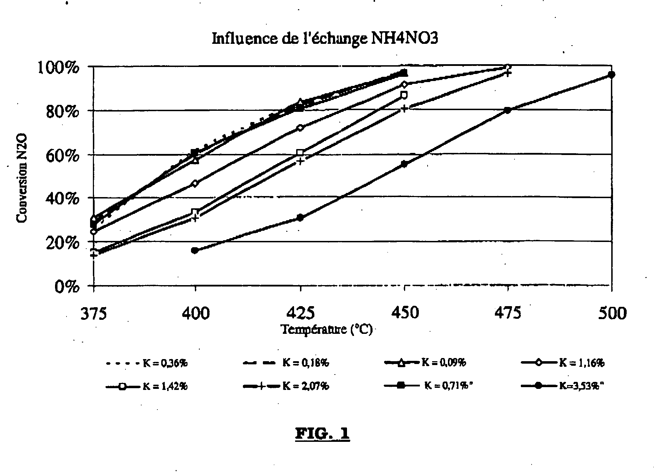

Les résultats de conversion de décomposition du N₂O en fonction de la température sont présentés en annexe, sur figure 1.

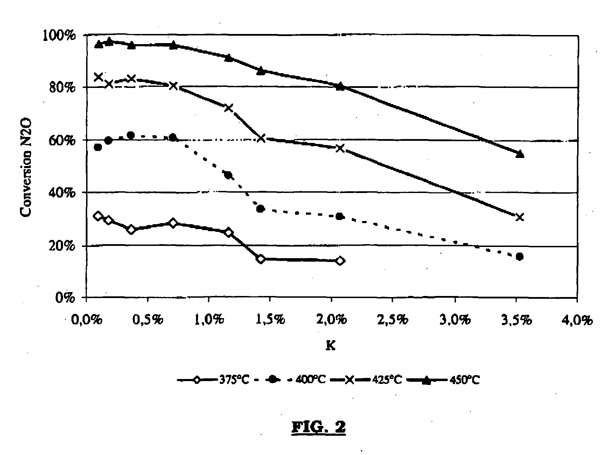

Pour mieux visualiser l'influence de la teneur en K, nous présentons en figure 2, en annexe, l'évolution de l'activité (% conversion) en fonction de la teneur en K, ceci pour différentes températures (en isotherme).

### Influence de la teneur en fer

Nous avons utilisé un lot d'extrudés de 1,8 mm de diamètre ayant été échangé par une solution de sulfate d'ammonium (800 g/l - 80 °C - 4 h - V/P =5), les teneurs en Na et K étant inférieures à 0,1 %.

Nous avons préparé différents échantillons de catalyseurs échangés au fer (sulfate de fer : FeSO₄7H₂O) en faisant varier les conditions opératoires pour avoir différentes teneurs en fer et comparer les résultats en décomposition de N₂O par des tests à l'échelle laboratoire dans des conditions similaires à l'exemple précédent.

Les conditions opératoires et les teneurs en fer figurent dans le tableau 2 ci-après

**Tableau 2**

| **Références** Catalyseur testé | **Echange sulfate de fer** Titre sol.- durée -T°C | **Teneur (%)** | | |
|---|---|---|---|---|
| | | **Fe** | **Na** | **K** |
| 9 | 0,2 M - 2h 30 - 80°C | 0,66 | < 0,01 | < 0,1 |
| 10 | 0,1 M - 2h 30 - 80°C | 0,47 | < 0,01 | < 0,1 |
| 11 | 2 M - 2h 30 - 80°C | 2,13 | < 0,01 | < 0,1 |
| 12 | 1 M - 2h30 - 80°C | 1,18 | 0,01 | < 0,1 |
| 13 | 0,05 M - 2h 30 - 80°C | 0,36 | 0,01 | < 0,1 |
| 14 | 1 M - 2h30 - 80°C | 1,78 | 0,01 | < 0,1 |

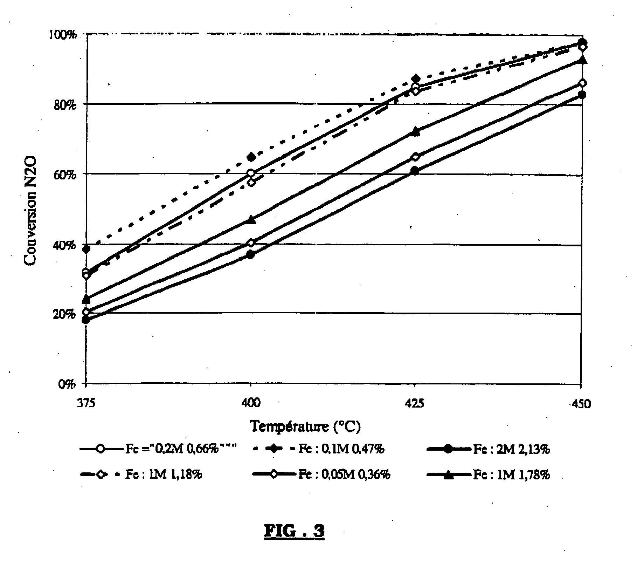

La conversion du N₂O en fonction de la température pour les différents catalyseurs à différentes teneurs en fer est présentée en annexe, figure 3.

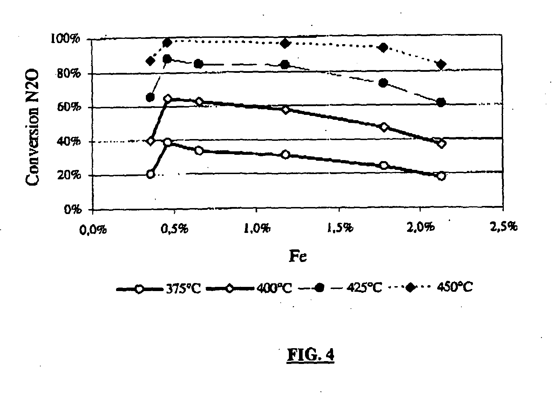

Pour mieux visualiser l'influence de la teneur en fer, nous avons représenté à la figure 4 en annexe, l'évolution de l'activité en fonction de la teneur en fer, ceci à différentes températures (en isotherme).

### Exemple illustrant le traitement en deux lits

1^{er} lit : décomposition N₂O
2^{ème} lit : réduction simultanée de NOx et N₂O avec entrée de NH₃ entre les deux lits

Le réacteur a un diamètre de 2,54 cm (1").

Le catalyseur utilisé est une ferriérite échangée au fer qui se présente sous forme d'extrudés de 1,8 mm de diamètre comprenant 20 % de liant à base d'alumine (exprimée en Al₂O₃).

Les teneurs en Fe, Na et K rapportées à la ferriérite sont respectivement de 0,8 %, inférieure à 0,1 % et 0,1 %.

Le réacteur comprend deux parties : la première pour la décomposition de N₂O et la deuxième pour la réduction simultanée de la teneur NOx et N₂O avec ajout NH₃ entre les deux réacteurs.

Les volumes de catalyseur sont de 25 cm³ dans chacun des réacteurs (soit une hauteur de 2").

On opère avec un gaz reconstitué dont la composition est la suivante :
- NOx : 600 ppmv
- N₂O : 600 ppmv
- O₂ : 5%
- H₂O : 1 % vol.
- Δ (complément): N₂
- rapport NO₂/NO supérieur à 1.

Le débit total de gaz à l'entrée du réacteur est de 500 Nl/h, soit une VVH de 20 000 h⁻¹ sur le premier lit (DN₂O) et le deuxième lit (DeNOx + DN₂O)

La température à l'entrée du premier réacteur est de 420°C.

La pression est de 8 bars.

La conversion du N₂O et O₂ sur le premier lit est de 80 %, soit une teneur en N₂O à l'entrée du deuxième lit de 120 ppmv.

On introduit de l'ammoniac entre les deux lits et le rapport NH₃/NOx + N₂O à l'entrée de ce deuxième lit est de 0,9.

Sur ce deuxième lit, la conversion des NOx est de 92 %, soit 48 ppmv NOx en sortie et celle en N₂O de 65 % soit 42 ppmv N₂O en sortie.

La teneur en NH₃ en sortie est nulle.

## Revendications

1. Catalyseur de décomposition de N₂O comprenant une zéolithe type ferriérite agglomérée, sous forme initiale Na, K échangée ammonium et finalement échangée au fer, **caractérisé en ce que** :
- le taux du dit fer varie de 0,5 à 1,2% en poids par rapport au poids de la zéolithe,
- le taux de sodium est inférieur à 0,1% et le taux de potassium inférieur à 0,7% en poids par rapport au poids de la zéolithe,
- ledit échange au fer est réalisé par des ions Fe²⁺.

2. Catalyseur selon la revendication 1, **caractérisé en ce que** le taux de potassium est inférieur à 0,5%.

3. Catalyseur selon la revendication 2, **caractérisé en ce que** le taux de potassium est inférieur à 0,1%.

4. Catalyseur selon l'une des revendications 1 à 3, **caractérisé en ce qu'**il est sous forme d'agglomérés composés de 70 à 90% en poids de ladite ferriérite et de 10 à 30% d'un liant sélectionné parmi les liants argileux, siliceux ou alumineux.

5. Catalyseur selon la revendication 4, **caractérisé en ce que** ledit liant est l'alumine peptisée.

6. Catalyseur selon l'une des revendications 1 à 5, **caractérisé en ce que** le ratio Al/Si varie de 8 à 15.

7. Catalyseur selon l'une des revendications 1 à 6, **caractérisé en ce que** ladite ferriérite peut être obtenue par un procédé comprenant les étapes suivantes :
i) échange sur la zéolithe agglomérée des ions sodium et potassium par un sel d'ammonium, pour les transformer en ions ammonium, suivi par
ii) échange au moins partiel desdits ions ammonium par des ions Fe²⁺ par un sel de fer, ledit sel de fer ayant un taux d'impuretés de moins de 0,5%, consistant essentiellement d'autres sels métalliques.

8. Procédé de préparation du catalyseur selon l'une des revendications 1 à 7, **caractérisé en qu'**il comprend les étapes suivantes :
i) Mise en forme du catalyseur, comprenant son mélange avec un liant et l'extrusion dudit mélange sous forme de granulés agglomérés
ii) Calcination desdits granulés agglomérés à une température allant de 350 à 450°C
iii) Refroidissement à l'ambiante, suivi d'échange par un sel d'ammonium en solution aqueuse, à une température allant de 50 à 80°C
iv) Lavage par trempage dans l'eau déminéralisée, suivi d'échange partiel au fer par des ions Fe²⁺, avec une solution aqueuse de sel de fer, ledit sel de fer ayant un taux d'impuretés de moins de 0,5%, consistant essentiellement d'autres sels métalliques
v) Nouveau lavage par trempage dans l'eau déminéralisée, suivi de séchage sur plateaux à une température de 80 à 110°C.

9. Procédé de préparation selon la revendication 8, **caractérisé en ce que** ledit sel de fer de l'étape d'échange iv) est le sulfate de fer avec un taux d'impuretés de moins de 0,5%, consistant essentiellement d'autres sels métalliques.

10. Procédé de traitement d'effluents gazeux comprenant N₂O, **caractérisé en ce que** ledit procédé comprend au moins une étape de décomposition de N₂O sur un lit catalytique comprenant comme catalyseur de décomposition au moins un catalyseur tel que défini selon l'une des revendications 1 à 7.

11. Procédé de traitement selon la revendication 10, **caractérisé en ce que** ladite étape de décomposition de N₂O a lieu sous pression allant de 3 à 12 bars et qu'elle concerne des effluents gazeux issus des queues d'ateliers de synthèse d'acide nitrique.

12. Procédé de traitement selon la revendication 10, **caractérisé en ce que** ladite étape de décomposition de N₂O a lieu sous pression atmosphérique et qu'elle concerne des effluents gazeux issus de l'oxydation nitrique de composés organiques, en chimie de synthèse organique.

13. Procédé selon l'une des revendications 10 ou 11, **caractérisé en ce que** lesdits effluents comprennent en plus du N₂O, des oxydes nitriques NOx et que ledit procédé comprend au moins les deux étapes suivantes :
i) Décomposition de N₂O sous pression, sur un premier lit catalytique comprenant au moins un catalyseur tel que défini selon l'une des revendications 1 à 7
ii) Réduction sous pression du mélange NOₓ et du N₂O résiduel issu de l'étape i) en présence d'ammoniac, sur un deuxième lit catalytique comprenant le même catalyseur que le lit catalytique de l'étape i).

14. Procédé selon la revendication 13, **caractérisé en ce que** le taux dudit N₂O résiduel à la fin de la première étape i) est de 100 à 200 ppmv et que le ratio volumique NH₃/ (NOx+N₂O) varie de 0,7 à 1,1.

15. Procédé selon la revendication 14, **caractérisé en ce que** ledit taux de N₂O résiduel est compris entre 150 et 200 ppmv et que le ratio volumique NH₃/ (NOx+N₂O) varie de 0,7 à 1.

16. Procédé selon l'une des revendications 13 à 15, **caractérisé en ce que** le catalyseur dudit lit catalytique de l'étape ii) est différent de celui de l'étape i), mais toujours choisi parmi les catalyseurs tels que définis selon l'une des revendications 1 à 7.

17. Procédé selon la revendication 13, **caractérisé en ce que** le catalyseur dudit lit catalytique de l'étape ii) est différent de celui de l'étape i) et différent de ceux définis selon l'une des revendications 1 à 7.

18. Procédé selon l'une des revendications 13 à 17, **caractérisé en ce qu'**il comprend une troisième étape de réduction sélective de NOx résiduel, sur un troisième lit catalytique séparé, avec un catalyseur sélectif pour la réduction de NOx, différent ou identique à celui de l'étape ii) et tel que défini selon l'une des revendications 1 à 7 ou différent de ceux définis selon l'une des revendications 1 à 7.

19. Procédé selon l'une des revendications 10, 13 à 18 **caractérisé en ce que** lesdits effluents gazeux sont les gaz de queue des ateliers de synthèse d'acide nitrique.

20. Procédé selon la revendication 10, **caractérisé en ce que** les effluents gazeux sont ceux des ateliers d'oxydation nitrique de composés organiques en synthèse organique, ou ceux issus des procédés et dispositifs de combustion, combustion comprenant la combustion du charbon en lit fluidisé LFC ou la combustion de la biomasse.

21. Procédé selon l'une des revendications 10, 11, 13 à 19 **caractérisé en ce que** lesdits effluents sont ceux de queue d'ateliers d'acide nitrique avec les caractéristiques suivantes :
- température : allant de 180 à 550°C
- teneur en N₂O : 200 à 1 500 ppmv
- teneur en Nox : 50 à 2 000 ppmv
- teneur en H₂O : 0,3 à 3%
- teneur en oxygène : environ 2 à 4%
- le complément étant essentiellement composé d'azote.

22. Procédé selon la revendication 12, **caractérisé en ce que** lesdits effluents sont ceux des ateliers d'oxydation nitrique de composés organiques dans la synthèse organique et avec les caractéristiques suivantes :
- teneur en N₂O : de 20 à 70%
- teneur en Nox : de 500 à 10 000 ppmv
- teneur vapeur eau : 0,5 à 10%
- teneur en oxygène : de 1 à 5%
- teneur en CO₂ : 0 à 5%
- présence éventuelle minoritaire de CO et de composés organiques
- le complément étant essentiellement composé d'azote.

23. Procédé de réduction simultanée de N₂O et des NOₓ par l'ammoniac, sur un seul et même lit catalytique, utilisant comme catalyseur de réduction au moins un catalyseur selon l'une des revendications 1 à 7.

24. Utilisation d'au moins un catalyseur selon l'une des revendications 1 à 7, ou préparé selon le procédé tel que défini selon les revendications 8 ou 9, **caractérisée en ce que** ledit catalyseur est utilisé pour la décomposition de N₂O et/ou pour la réduction simultanée de N₂O et de NOx en présence d'ammoniac.

25. Utilisation selon la revendication 24, **caractérisée en ce qu'**elle s'applique au traitement DeN20 et/ou DeNOx des effluents gazeux de queue d'ateliers de synthèse d'acide nitrique.

26. Utilisation selon la revendication 24, **caractérisée en ce qu'**elle s'applique au traitement des effluents gazeux issus des ateliers d'oxydation nitrique de composés organiques en chimie de synthèse organique ou au traitement des effluents gazeux issus des procédés et dispositifs de combustion, comprenant la combustion du charbon en lit fluidisé LFC ou la combustion de la biomasse.

## Claims

1. A catalyst for decomposition of N₂O comprising a zeolite of the agglomerated ferrierite type, in an initially ammonium-exchanged and finally iron-exchanged Na, K form, , **characterized in that**:
- the content of said iron varies from 0.5 to 1.2% by weight, based on the weight of the zeolite,
- the sodium content is less than 0.1 % and the potassium content is less than 0.7% by weight, based on the weight of the zeolite,
- said iron exchange is achieved with Fe²⁺ ions.

2. The catalyst according to claim 1, **characterized in that** the potassium content is less than 0.5%.

3. The catalyst according to claim 2, **characterized in that** the potassium content is less than 0.1%.

4. The catalyst according to one of claims 1 to 3, **characterized in that** it is in the form of agglomerates consisting of 70 to 90% by weight of said ferrierite and of 10 to 30% of a binder, selected from clay, silica or alumina binders.

5. The catalyst according to claim 4, **characterized in that** said binder is peptized alumina.

6. The catalyst according to one of claims 1 to 5, **characterized in that** the Al/Si ratio varies from 8 to 15.

7. The catalyst according to one of claims 1 to 6, **characterized in that** said ferrierite may be obtained by a method comprising the following steps:
i) exchange on the agglomerated zeolite of sodium and potassium ions by an ammonium salt, in order to transform them into ammonium ions, followed by
ii) at least partial exchange of said ammonium ions with Fe²⁺ ions by an iron salt, said iron salt having a level of impurities of less than 0.5%, essentially consisting of other metal salts.

8. A method for preparing the catalyst according to one of claims 1 to 7, **characterized in that** it comprises the following steps:
i) shaping the catalyst, comprising its mixing with a binder and extruding said mixture as agglomerated granules
ii) calcining said agglomerated granules at a temperature ranging from 350 to 450°C
iii) cooling at room temperature, followed by exchange with an ammonium salt in an aqueous solution, at a temperature ranging from 50 to 80°C
iv) washing by soaking in demineralized water, followed by partial iron exchange by Fe²⁺ ions, by an iron salt aqueous solution, said iron salt having a level of impurities of less than 0.5%, essentially consisting of other metal salts
v) new washing by soaking in demineralized water, followed by drying on plates at a temperature from 80 to 110°C.

9. The preparation method according to claim 8, **characterized in that** said iron salt of the exchange step iv) is iron sulfate with a level of impurities of less than 0.5%, essentially consisting of other metal salts.

10. A method for treating gas effluents comprising N₂O, **characterized in that** said method comprises at least one step for decomposing N₂O on a catalytic bed comprising as a decomposition catalyst at least one catalyst as defined according to one of claims 1 to 7.

11. The treatment method according to claim 10, **characterized in that** said N₂O decomposition step takes place under a pressure ranging from 3 to 12 bars and that its concerns gas effluents stemming from workshop tail end lines for synthesizing nitric acid.

12. The treatment method according to claim 10, **characterized in that** said N₂O decomposition step takes place under atmospheric pressure and that it concerns gas effluents from nitric oxidation of organic compounds, in organic synthesis chemistry.

13. The method according to one of claims 10 or 11, **characterized in that** said effluents further comprise N₂O, nitric oxides NOₓ and that said method comprises at least the two following steps:
i) decomposition of N₂O under pressure, on a first catalytic bed comprising at least one catalyst as defined according to one of claims 1 to 7
ii) reduction under pressure of the NOₓ mixture and of the residual N₂O from step i) in the presence of ammonia, on a second catalytic bed comprising the same catalyst as the catalytic bed of step i).

14. The method according to claim 13, **characterized in that** the level of said residual N₂O at the end of the first step i) is from 100 to 200 ppmv and that the volume ratio NH₃/(NOₓ+ N₂O) varies from 0.7 to 1.1.

15. The method according to claim 14, **characterized in that** said residual N₂O level is comprised between 150 and 200 ppmv and that the volume ratio NH₃/(NOₓ+ N₂O) varies from 0.7 to 1.

16. The method according to one of claims 13 to 15, **characterized in that** the catalyst of said catalytic bed of step ii) is different from the one of step i), but always selected from the catalysts as defined according to one of claims 1 to 7.

17. The method according to claim 13, **characterized in that** the catalyst of said catalytic bed of step ii) is different from the one of step i), and different from those defined according to one of claims 1 to 7.

18. The method according to one of claims 13 to 17, **characterized in that** it comprises a third step for selective reduction of residual NOₓ, on a third separate catalytic bed, with a selective catalyst for reduction of NOₓ, identical or different from that of step ii) and as defined according to one of claims 1 to 7 or different from those defined according to one of claims 1 to 7.

19. The method according to one of claims 10, 13 to 18, **characterized in that** said gas effluents are tail end line gases of nitric acid synthesis workshops.

20. The method according to claim 10, **characterized in that** the gas effluents are those from workshops for nitric oxidation of organic compounds in organic synthesis, or those stemming from combustion processes and devices, a combustion comprising the combustion of coal in a fluidized bed LFC or the combustion of biomass.

21. The method according to one of claims 10, 11, 13 to 19, **characterized in that** said effluents are those from the tail end line of nitric acid workshops with the following characteristics:
- temperature: ranging from 180 to 550°C
- N₂O content: 200 to 1,500 ppmv
- NOₓ content: 50 to 2,000 ppmv
- H₂O content: 0.3 to 3%.
- oxygen content: about 2 to 4%.
- the balance essentially consisting of nitrogen.

22. The method according to claim 12, **characterized in that** said effluents are those from workshops for nitric oxidation of organic compounds in organic synthesis and with the following characteristics:
- N₂O content: from 20 to 70%
- NOₓ content: from 500 to 10,000 ppmv
- steam content: 0.5 to 10%.
- oxygen content: 1 to 5%.
- CO₂ content: 0 to 5%
- possible minority presence of CO and of organic compounds
- the balance essentially consisting of nitrogen.

23. A method for simultaneous reduction of N₂O and NOₓ by ammonia, on a single and same catalytic bed, using as a reduction catalyst at least one catalyst according to one of claims 1 to 7.

24. The use of at least one catalyst according to one of claims 1 to 7, or prepared according to the method as defined according to claims 8 or 9, **characterized in that** said catalyst is used for decomposition of N₂O and/or for simultaneous reduction of N₂O and NOₓ in the presence of ammonia.

25. The use according to claim 24, **characterized in that** it applies to the DeN₂O and/or DeNOₓ treatment of gas effluents from the tail end line of workshops for synthesizing nitric acid.

26. The use according to claim 24, **characterized in that** it applies to the treatment of gas effluents from the tail end line of workshops for nitric oxidation of organic compounds in organic synthesis chemistry or to the treatment of gas effluents from combustion processes and devices, comprising the combustion of coal in a fluidized bed LFC or combustion of biomass.

## Patentansprüche

1. Katalysator zum N₂O-Abbau, der ein Zeolith vom Typ agglomeriertes Ferrierit in Na-Ausgangsform, K gegen Ammonium und schließlich gegen Eisen ausgetauscht enthält, **dadurch gekennzeichnet, dass**:
- der Eisengehalt von 0,5 bis 1,2 Gew.-% im Verhältnis zum Gewicht des Zeoliths schwankt,
- der Natriumgehalt niedriger als 0,1 Gew.% und der Kaliumgehalt niedriger als 0,7 Gew.-% im Verhältnis zum Gewicht des Zeoliths ist,
- der Austausch gegen Eisen von Fe²⁺-Ionen durchgeführt wird.

2. Katalysator nach Anspruch 1, **dadurch gekennzeichnet, dass** der Kaliumgehalt niedriger als 0,5 % ist.

3. Katalysator nach Anspruch 2, **dadurch gekennzeichnet, dass** der Kaliumgehalt niedriger als 0,1 % ist.

4. Katalysator nach einem der Ansprüche 1 bis 3, **dadurch gekennzeichnet, dass** er in Form von Agglomeraten vorliegt, die sich zu 70 bis 90 Gew.-% aus Ferrierit und zu 10 bis 30 Gew.-% aus einem Bindemittel zusammensetzen, das aus den ton-, siliciumoxid- oder aluminiumoxidhaltigen Bindemitteln ausgewählt ist.

5. Katalysator nach Anspruch 4, **dadurch gekennzeichnet, dass** das Bindemittel peptisiertes Aluminiumoxid ist.

6. Katalysator nach einem der Ansprüche 1 bis 5, **dadurch gekennzeichnet, dass** das Verhältnis Al/Si von 8 bis 15 schwankt.

7. Katalysator nach einem der Ansprüche 1 bis 6, **dadurch gekennzeichnet, dass** das Ferrierit durch ein Verfahren herstellbar ist, das die folgenden Schritte umfasst:
i) Austausch der Natrium- und Kaliumionen auf dem agglomerierten Zeolith durch ein Ammoniumsalz, um sie in Ammoniumionen umzuwandeln, gefolgt vom
ii) zumindest teilweisem Austausch der Ammoniumionen durch Fe²⁺-Ionen eines Eisensalzes, wobei das Eisensalz einen Gehalt an Unreinheiten von weniger als 0,5 % hat, die im Wesentlichen aus anderen Metallsalzen bestehen.

8. Herstellungsverfahren des Katalysators nach einem der Ansprüche 1 bis 7, **dadurch gekennzeichnet, dass** es die folgenden Schritte umfasst:
i) Aufbereiten des Katalysator, die sein Mischen mit einem Bindemittel und die Extrusion des Gemischs in Form agglomerierter Granulate umfasst,
ii) Kalzinieren der agglomerierten Granulate bei einer Temperatur von 350 bis 450 °C,
iii) Abkühlen auf Raumtemperatur, gefolgt vom Austausch durch ein Ammoniumsalz in wässriger Lösung bei einer Temperatur von 50 bis 80 °C,
iv) Waschen durch Eintauchen in demineralisiertes Wasser, gefolgt vom teilweisen Austausch gegen Eisen durch Fe²⁺-Ionen mit einer wässrigen Eisensalzlösung, wobei das Eisensalz einen Gehalt an Unreinheiten von weniger als 0,5 % hat, die im Wesentlichen aus anderen Metallsalzen bestehen,
v) erneutes Waschen durch Eintauchen in demineralisiertes Wasser, gefolgt von Trocknen auf Platten bei einer Temperatur von 80 bis 110 °C.

9. Herstellungsverfahren nach Anspruch 8, **dadurch gekennzeichnet, dass** das Eisensalz des Austauschschritts iv) Eisensulfat ist mit einem Gehalt an Unreinheiten von weniger als 0,5 %, die im Wesentlichen aus anderen Metallsalzen bestehen.

10. Verfahren zur Behandlung von Abgasen, die N₂O umfassen, **dadurch gekennzeichnet, dass** das Verfahren mindestens einen Schritt des N₂O-Abbaus auf einem Katalysatorbett umfasst, das als Abbaukatalysator mindestens einen Katalysator nach einem der Ansprüche 1 bis 7 umfasst.

11. Behandlungsverfahren nach Anspruch 10, **dadurch gekennzeichnet, dass** der Schritt des N₂O-Abbaus unter Druck von 3 bis 12 bar stattfindet und dass er Abgase der Endgase von Salpetersäuresyntheseanlagen betrifft.

12. Behandlungsverfahren nach Anspruch 10, **dadurch gekennzeichnet, dass** der Schritt des N₂O-Abbaus unter atmosphärischem Druck stattfindet und dass er bei der organischen Synthesechemie Abgase der Stickoxidation organischer Verbindungen betrifft.

13. Verfahren nach einem der Ansprüche 10 oder 11, **dadurch gekennzeichnet, dass** die Abgase neben dem N₂O NOₓ-Stickoxide umfassen und das Verfahren mindestens die folgenden zwei Schritte umfasst:
i) Abbau von N₂O unter Druck auf einem ersten Katalysatorbett, das mindestens einen Katalysator nach einem der Ansprüche 1 bis 7 umfasst,
ii) Reduktion unter Druck des NOₓ-Gemischs und des restlichen N₂O von Schritt i) in Anwesenheit von Ammoniak auf einem zweiten Katalysatorbett, das denselben Katalysator wie das Katalysatorbett von Schritt i) umfasst.

14. Verfahren nach Anspruch 13, **dadurch gekennzeichnet, dass** der N₂O-Restgehalt am Ende des ersten Schritts i) 100 bis 200 ppmv beträgt und dass das Volumenverhältnis NH₃/(NOₓ+N₂O) von 0,7 bis 1,1 schwankt.

15. Verfahren nach Anspruch 14, **dadurch gekennzeichnet, dass** der N₂O-Restgehalt zwischen 150 und 200 ppmv inklusive ist und dass das Volumenverhältnis NH₃/(NOₓ+N₂O) von 0,7 bis 1 schwankt.

16. Verfahren nach einem der Ansprüche 13 bis 15, **dadurch gekennzeichnet, dass** sich der Katalysator des Katalysatorbetts von Schritt ii) von dem von Schritt i) unterscheidet, aber auch aus den Katalysatoren nach einem der Ansprüche 1 bis 7 ausgewählt ist.

17. Verfahren nach Anspruch 13, **dadurch gekennzeichnet, dass** sich der Katalysator des Katalysatorbetts von Schritt ii) von dem von Schritt i) unterscheidet und von denen, die nach einem der Ansprüche 1 bis 7 definiert sind.

18. Verfahren nach einem der Ansprüche 13 bis 17, **dadurch gekennzeichnet, dass** es einen dritten Schritt der selektiven Reduktion von Rest-NOₓ auf einem separaten dritten Katalysatorbett mit einem selektiven Katalysator für von NOₓ- Reduktion umfasst, der sich von dem von Schritt ii) unterscheidet oder identisch ist und wie nach einem der Ansprüche 1 bis 7 ist oder von denen nach einem der Ansprüche 1 bis 7 unterscheidet.

19. Verfahren nach einem der Ansprüche 10, 13 bis 18, **dadurch gekennzeichnet, dass** die Abgase Endgase der Salpetersäuresyntheseanlagen sind.

20. Verfahren nach Anspruch 10, **dadurch gekennzeichnet, dass** die Abgase aus den Anlagen zur Salpetersäureoxidation organischer Verbindungen in organischer Synthese oder aus den Verbrennungsverfahren und -vorrichtungen stammen, wobei die Verbrennung die Kohleverbrennung in zirkulierender Wirbelschicht oder die Biomasse-Verbrennung umfasst.

21. Verfahren nach einem der Ansprüche 10, 11, 13 bis 19, **dadurch gekennzeichnet, dass** die Abgase Endgase von Salpetersäureanlagen sind mit den folgenden Eigenschaften:
- Temperatur: von 180 bis 550 °C,
- N₂O-Gehalt: 200 bis 1500 ppmv,
- NOₓ-Gehalt: 50 bis 2000 ppmv,
- H₂O-Gehalt: 0,3 bis 3 %,
- Sauerstoffgehalt: zirka 2 bis 4 %,
- wobei sich das Komplement im Wesentlichen aus Stickstoff zusammensetzt.

22. Verfahren nach Anspruch 12, **dadurch gekennzeichnet, dass** die Abgase aus den Anlagen zur Salpetersäureoxidation organischer Verbindungen in der organischen Synthese stammen und mit den folgenden Eigenschaften:
- N₂O-Gehalt: 20 bis 70 %,
- NOₓ-Gehalt: 500 bis 10000 ppmv,
- Wasserdampf-Gehalt: 0,5 bis 10 %,
- Sauerstoffgehalt: 1 bis 5 %,
- CO₂-Gehalt: 0 bis 5 %,
- eventuell minoritäres Vorhandensein von CO und von organischen Verbindungen,
- wobei sich das Komplement im Wesentlichen aus Stickstoff zusammensetzt.

23. Verfahren zur gleichzeitigen Reduktion von N₂O und der NOₓ durch Ammoniak auf ein und demselben Katalysatorbett, wobei als Reduktionskatalysator zumindest ein Katalysator nach einem der Ansprüche 1 bis 7 verwendet wird.

24. Verwendung mindestens eines Katalysators nach einem der Ansprüche 1 bis 7 oder eines nach dem Verfahren wie nach den Ansprüchen 8 oder 9 definiert vorbereiteten Katalysators, **dadurch gekennzeichnet, dass** der Katalysator für den N₂O-Abbau und/oder für die gleichzeitige Reduktion von N₂O und von NOₓ in Anwesenheit von Ammoniak verwendet wird.

25. Verwendung nach Anspruch 24, **dadurch gekennzeichnet, dass** sie zur Behandlung von N₂O und/oder von NOₓ der Abgase von Endgasen von Salpetersäuresyntheseanlagen angewendet wird.

26. Verwendung nach Anspruch 24, **dadurch gekennzeichnet, dass** sie zur Behandlung von Abgasen aus Anlagen zur Salpetersäureoxidation organischer Verbindungen in der organischen Synthesechemie oder zur Behandlung von Abgasen von Verbrennungsverfahren und -vorrichtungen angewendet wird, die die Kohleverbrennung in zirkulierender Wirbelschicht oder die Biomasse-Verbrennung umfasst.
